# NEUE EUROPÄISCHE PATENTSCHRIFT

(11) **EP 0 881 162 B2**
(45) Veröffentlichungstag und Bekanntmachung des Hinweises auf die Entscheidung über den Einspruch: **02.08.2006**
(45) Hinweis auf die Patenterteilung: 24.02.1999
(21) Anmeldenummer: 97106666.7
(22) Anmeldetag: 22.04.1997
(51) Int. Cl.: B65D 77/20

(54) **Verfahren zum Verschliessen einer aus natürlichen Fasern und/oder Stärke zusammengesetzten Schale mit einer siegelbaren Folie, und dergestalt verschlossene Schale und damit gebildete Verpackungseinheit**
Method for closing a tray composed of natural fibres and/or starch with a sealable foil, and tray closed in such a way and package unit formed therewith
Procédé pour fermer une barquette réalisée en fibres naturelles et/ou amidon avec un opercule scellable, et barquette fermée de la sorte et unité d'emballage ainsi formée

(43) Veröffentlichungstag der Anmeldung: 02.12.1998
(73) Patentinhaber: Omni-Pac Ekco GmbH & Co. KG Verpackungsmittel, 22765 Hamburg (DE)
(72) Erfinder: Schmitz, Heinz Jürgen, 21255 Tostedt (DE)
(74) Vertreter: Glawe, Delfs, Moll

(56) Entgegenhaltungen:
- WO-A-94/11170
- DE-A- 3 312 519
- GB-A- 2 115 770
- US-A- 1 590 956
- US-A- 2 990 948
- TND-Bericht

## Beschreibung

Die Erfindung betrifft ein Verfahren zum Verschließen einer aus natürlichen Fasern oder Partikeln zusammengesetzten Schale, insbesondere einer Holzschliffschale, mittels einer mit dem Rand der Schale zu versiegelnden Folie. Sie betrifft ferner einer mittels einer solchen Folie verschlossene Schale.

Die Erfindung zielt vornehmlich auf Holzschliffschalen. Das Material solcher Schalen ist beispielsweise von Eierkartons allgemein bekannt. Sie werden dadurch hergestellt, daß Fasermaterial aus wässriger Ausschlemmung gegen die Oberfläche eines Formsiebs gesaugt wird und dort eine Schicht bildet Nach Wasserentzug sind die Fasern durch Verfilzung und/oder geringe Mengen eines Bindemittels vergleichsweise locker miteinander verbunden. Strukturell ähnliche Werkstoffe lassen sich auch aus anderen, fasrigen Rohstoffen gewinnen, beispielsweise aus Seetang. Auch gebackene Stärkeprodulkte, die je nach Verwendungszweck dicht oder locker sind und Zellulosefasern oder Partikeln enthalten können, sind für die erfindungsgemäßen Zwecke geeignet.

Es ist bekannt, daß derartige Naturstoffschalen, insbesondere Hölzschliffschalen, als Verpackungsmittel gegenüber den mit ihnen konkurrierenden Kunststoffschalen in umwelttechnischer Hinsicht beträchtliche vorteile haben. Sie lassen sich mehr oder weniger schadstofffrei vernichten und können leicht In verrottbarer Form ausgeführt werden. Auch für manche Verpackungsgüter, insbesondere Obst und dergleichen feuchtende Lebensmittel, haben sie Vorteile gegenüber Kunststoffschalen. Dennoch haben Kunststoffschalen eine vergleichsweise starke Steliung auf dem Verpakkungsmarkt erlangt, insbesondere dann, wenn eine aufgesiegelte, Verscl1lußfolie erforderlich ist. Bei der Versiegelung werden die Ränder der Schale und des Deckels miteinander verschweißt oder schweißahnlich verbunden. In der Regel ist es dazu erforderlich, daß die miteinander zu versiegelrtden Teile aus Kunststoff bestehen und im Hinblick auf die Verschweißung aufeinander abgestimmt sind. Es ist auch bekannt, Holzschliffschalen mit einer Auskleidung aus Kunststoffolie zu versehen und diese mit einer Verschlüßfolie zu versiegeln (DE-A 33 12 519). Jedoch hat dies den Nachteil, daß die Naturstoffeigenschaften des Schalenmaterials nicht mehr unmittelbar gegenüber dem Packgut zur Geltung kommen.

Eine Forderung an Siegelabdeckungen von Verpackungsschalen besteht auch darin, daß sie hinreichend leicht lösbar sind, um den Verpackungsinhalt zugänglich zu machen. Es wurde eine ausgefeilte Technik zur Erzeugung von Siegelnähten entwickelt, deren Festigkeit derart begrenzt ist, daß sie sich durch Abschälen der Deckfolie wieder lösen lassen (ebenfalls DE-A 33 12 519). Das Problem der Lösbarkeit ist insbesondere bei Verpackungsbehältern aus Papier oder Karton kritisch, weil dann, wenn die Siegelnaht nicht schwach genug bemessen ist, die Gefahr besteht, daß der Karton oder das Papier zerreißt und damit seine weiterhin erforderliche Funktion als Behälter einbüßt oder zumindest unansehnlich wird.

Aus der US-2 990 948 ist eine Verpackung bekannt, bei der die Deckfolie unmittelbar auf die Schale aufgesiegelt ist. Als Material für die Schale wird auf voverpreßtes Material verwiesen. Das ist aufwendig.

Der Erfindung liegt die überraschende Erkenntnis zugrunde, daß der Rand von Holzschliff- und anderen Naturstoffschalen mit einer Abdeckfolie unmittelbar versiegelt werden kann, ohne daß es einer besonderen, siegelfähigen. Beschichtung des Schalenmaterials bedarf. Es stellt sich dabei keine Schweißverbindung mit den nicht thermoplastischen Partikeln des Schalenmaterials ein, sondern eine Art Heißverklebung des Kunststaffmaterials mit den oberflächlichen Fasern oder Partikeln. Diese verbindung kann beim Abziehen der Deckfolie überwiegend nicht gelöst werden. Dennoch läßt sich die Deckfolie leicht abziehen und büßt auch die Schale ihre Behälterfunktion und ihre Ansehnlichkeit nicht ein, weil sich die mit dem Kunststoff verklebten Partikeln des Schalenmaterials Infolge eines entsprechend geringen inneren Zusammenhalts dieses Materials aus dem Verband lösen. Die Decidolie wird also samt den mit ihr verklebten Fasern bzw. Partikeln von der Schale gelöst. Die Erfindung beruht somit auf der Tatsache, daß die von der verbindung mit der Folie erfaßten Partikeln Oberwiegend starker an der Folie als im verband des Schalenmaterials verankert sind. Die Gefahr des Weiterreißens oder einer unansehnlichen verletzung besteht deshalb nicht. Gegenstand der Erfindung ist zum einen ein Verfahren gemäß Anspruch 1, sowie zum anderen die Schale selbst gemäß Anspruch 3. Es ist im Zusammenhang der Erfindung erforderlich, daß die Deckfolie unmittelbar mit den oberflächlichen Partikeln bzw. Fasern des Schalenmaterials durch Schmelzverklebung verbunden ist. Dies schließt solche Schalen ein, deren der Deckfolie zugewandte Oberfiache eine Imprägnierung trägt, sofern der innere Zusammenhalt dieser Imprägnierung sehr gering ist. Dann läßt sich nämlich die Deckfolle, wie dies zuvor beschrieben wurde, von der Schale abziehen, während ihre verbindung mit den oberflächlichen Partikeln bzw. Fasern der Schale aufrechterhalten bleibt. Die Verhältnisse werden durch die Imprägnierung nicht geändert. Der geringe Zusammenhalt innerhalb der Imprägnierung sorgt dafür, daß diese beim Abziehen der Deckfolie nicht außerhalb des Siegelbereichs von der Schale abgezogen wird.

Bei Holzschliffschalen oder anderen aus wäßriger Aufschlemmung gewonnenen, lockeren Schalen kann die Schichtdicke beträchtliche Unregelmäßigkeiten aufweisen. Die Oberfläche des Schalenflanschs, an dem die Siegelverbindung mit der Deckfolie vorgesehen werden soll, ist daher oftmals keineswegs eben. Trotzdem erreicht die Erfindung eine gleichmäßige Versiegelung dann, wenn der beim Siegeln verwendete Druck so groß ist, daß das Flanschmaterial hinreichend zusammengedrückt wird an seinen dicksten Stellen um mindestens 30%. Besser noch ist eine zumindest zeitweise während des Siegelvorgangs stattfindende Kompression auf etwa halbe Dicke. Der Siegelvorgang erreicht dann auch mit hoher Sicherheit die vertieften Stellen der Holzschliffoberfläche. Dies gilt für Schalenmaterial, das vor dem Siegelvorgang nicht noch gesondert verpreßt worden ist.

Ein geringer Anteil an Additiven, z.B. Bindemittel oder Dichtmittel ist für die Erfindung ohne Belang, solange dadurch nicht die Fähigkeit der von der Heißverklebung erfaßten Oberflächenfasern wesentlich beeinträchtigt ist, sich aus dem verband zu lösen, wenn die Deckfolie von der Schale abgenommen werden soll.

Zweckmäßigerweise verwendet man eine Kunststoffolie, die schalenseitig aus einem niedriger schmelzenden Material als auf der schatenfernen Seite besteht. Dadurch kann dafür gesorgt werden, daß schalenseitig eine einwandfreie Aufschmelzung des Kunststofis und demzufolge eine gute Heißverklebung erfolgt, während die Folie auf der schalenfernen Seite nicht oder nicht so stark angeschmolzen oder beeinträchtigt wird, daß sie dadurch ihre Formhaltigkeit und Ansehnlichkeit verliert. Ebenso kann eine siegelbar beschichtete Metallfolie oder ein siegelbar beschichteter Karton verwendet werden.

Der Rand der Holzschliffschale sollte so ausgebildet sein, daß er quer zur Öffnungsfläche von einem Heißsiegelwerkzeug üblicher Art beaufschlagt und dabei von der Gegenseite her abgestützt werden kann. Zu diesem Zweck kragt er seitlich von der Schalenwandung vor, so daß der eine Werkzeugteil von unten und der andere von oben darauf einwirken kann. Daraus ergibt sich die Form eines Randflansches, der vorzugsweise eben ist aber nicht sein muß. Nach der Aufsiegelung der Deckfolie ist seine Oberseite mit dieser bzw. deren schalenseitigen Schicht durch Schmelzverklebung verbunden, Zweckmäßigerweise beträgt die normale Randflanschbreite mindestens etwa 3mm, vorzugsweise 5mm, damit auch in denjenigen Bereichen, in denen sie durch Herstellungsunregelmäßigkeiten vermindert sein mag, noch eine hinreichende Follienverbindungsfläche verbleibt.

Die Deckfolie kann geschlossen sein, ist aber zweckmäßigerweise gelocht. Die Lochung dient zum einen der Ventilation des verpackten Produkts. Dadurch werden die natürlichen, wertvollen Verpackungseigenschaften von Holzschliffschalen weiter verstärkt, insbesondere die Abführung von Feuchtigkeit Sie hat zum anderen den Vorteil, daß sie die Versiegelungsqualität bei leicht feuchtem Schalenmaterial fördert.

Im Hinblick auf die Durchlüftung des Verpakkungsguts kann auch die Schale - wie bekannt - mit Durchbrechungen versehen sein. Die Durchlüftung des Verpackungsguts erleichtert auch die Kühlung des Verpackungsguts sowie die Begasung, die im logistischen Ablauf (Lagerung, Transport) an größeren Verpakkungseinheiten, beispielsweise palettenweise, vorgenommen werden kann.

Die Deckfolie wird zweckmäßigerweise gestreckt, also im Normalfall in ebener Gestalt, aufgesiegelt. Sie bewirkt dadurch eine Stabilisierung der Schalenränder selbst dann, wenn sie sehr dünn ist, beispielsweise unter 0,02mm und daher keinerlei Eigensteifigkeit besitzt Diese Stabilisierung beruht darauf, daß die Schalenränder nicht nach außen ausweichen können. Es hat sich gezeigt, daß sich daraus sogar eine gewisse Stapelfähigkeit ergibt, selbst wenn die Deckfolie keine Egensteifigkeit aufweist Beträchtlich ist die Stapelfähigkeit dann, wenn durch eine Zwischenlage aus steifern Flachmaterial für eine gleichmäßige Kraft-Obertragung von einer oberen Stapelschicht auf die Ränder der Holzschliffschalen in der nächstunteren Stapelschicht gesorgt wird. Damit sich jeweils der gesamte Schalenrand an der. Kraftübertragung beteiligen kann, ist die Offnungsfläche und damit auch die randversiegelte Kunststoffolie vorzugsweise eben. Es wird so die Möglichkeit geschaffen, mehrere Schichten erfindungsgemäß verschlossener Holzschliffschalen in einer Verpackungseinheit gemäß'Anspruch 12, beispielsweise in einem Karton oder auf einer Palette zu stapeln. Um auch in diesem Fall die Durchlüftung des Verpackungsguts gewünschtenfalls zu gewährleisten, können die Zwischenlagen mit Perforationen oder Ausschnitten versehen sein.

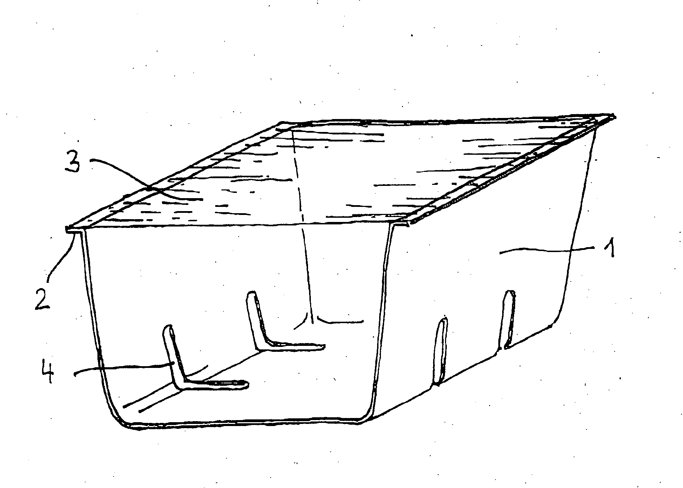

Die Zeichnung zeigt eine erfindungsgemäß verschlossene, halb geschnittene Holzschliffschale in perspektivischer Ansicht

Die Schale 1, deren unverpreßte Wandungsdicke vorzugsweise zwischen 0,8 und 3 mm; vorzugsweise in der Größenordnung von 1mm liegt und deren Größe beispielsweise diejenige ist, die man von üblichen Obstverpackungsschalen kennt, weist einen ebenen Randflansch 2 auf, dem die Deckfolie 3 in ebener, gestreckter Gestalt aufgesiegelt ist Ihre Haftfestigkelt ist hoch und genügt sämtlichen logistischen Anforderungen. Trotzdem kann sie leicht abgetrennt werden weil die Oberflächenfasern des Randflanschs 2, mit denen sie schmelzverklebt ist, sich hinreichend leicht aus dem Faserverband lösen lassen.

Die Schale 1 kann Durchbrechungen 4 zur Durchlüftung des Verpackungsguts aufweisen. Auch die Deckfolie 3 kann durchlüftungsgeeignete Öffnungen aufweisen, beispielsweise in der Form einer gleichmä-Bigen Perforation. Die Deckfolie kann aus einer bei Siegeltemperatur wärmestabilen, äußeren Schicht und einer bei dieser Temperatur leicht schmelzenden inneren Schicht besteht.

Die Stabilität der Schale einschließlich ihrer dünnen Deckfolie ist so groß, daß mehrere längliche, gefüllte Schalen zumindest kreuzweise ohne Beeinträchtigung des Füllguts aufeinander gestapelt werden können. Erst recht ist dies dann möglich, wenn in größeren Verpackungseinheiten (Kartons, Paletten) mehrere Schichten von derartigen Schalen durch eine Pappzwischenlage beispielsweise aus Wellpappe voneinander getrennt sind.

## Patentansprüche

1. verfahren zum Verschließen einer aus natürlichen Partikeln oder Fasern zusammengesetzten Schale (1) mittels einer mit dem Rand der Schale zu versiegelnden Deckfolie (3), bei dem die Deckfolie unmittelbar mit den oberflächlichen Partikeln bzw. Fasern durch Heißverklebung versiegelt wird und die Verbindungsfestigkeit, zwischen der Deckfolie (3) und den oberflächlichen Partikeln bzw. Fasern des Schalenmaterials überwiegend großer ist als die Verbindungsfestigkeit zwischen den oberflächlichen Partikeln bzw, Fasern und dem übrigen Schalenmaterial, **dadurch gekennzeichnet, daß** das Schalenmaterial vor dem Siegeln nicht verpreßt wird und bei der Siegelung an seinen dicksten Stellen um mindestens 30% zusammengedrückt wird.

2. Verfahren nach Anspruch 1, **dadurch gekennzeichnet, daß** eine Deckfolie verwendet wird, die schalenseitig aus einem niedriger schmelzenden Material als auf der schalenfernen Seite besteht.

3. Mittels einer Deckfolie (3) verschlossene, aus natürlichen Partikeln oder Fasern zusammengesetzte Schale (1) deren Randflansch (2) mit der Deckfolie (3) durch Schmelzverklebung in solcher Weise verbunden ist, daß die Deckfolie unmittelbar an den oberflächlichen Partikeln bzw. Fasern des Randflanschs mit größerer Verbindungsfestigkeit haftet als diese Partikeln bzw. Fasern am übrigen Schalenmaterial, **dadurch gekennzeichnet, daß** das Schalenmaterial vor dem Siegeln nicht verpreßt ist, und daß das Siegelung unterogene Schalenmaterial (2) an seinen dicksten Stellen um mindestens 30% zusammengedrükt ist.

4. Schale nach, Anspruch 3, **dadurch gekennzeichnet, daß** die Deckfolie (3) eine Verbundfolie ist, deren schalenseitige Schicht nach Aufschmelzung mit der Oberfläche der Holzschliffschale verbunden ist.

5. Schale nach Anspruch 3 öder 4, **dadurch gekennzeichnet, daß** die Deckfolie (3) gelocht ist.

6. Schale nach einem der Ansprüche 3 bis 5, **dadurch gekennzeichnet, daß** sie Durchbrechungen (4) aufweist.

7. Schale nach einem der Ansprüche 3 bis 6, **dadurch gekennzeichnet, daß** der Schalenflansch (2) mindestens 3 mm breit ist.

8. Schale nach einem der Ansprüche 3 bis 7, **dadurch gekennzeichnet, daß** die Deckfolie (3) gestreckt aufgesiegelt ist.

## Claims

1. Method which allows a tray (1) made up of natural particles or fibres to be closed by means of a covering sheet (3) which can be sealed to the border of the tray,
in the case of which the covering sheet is sealed directly to the surface particles or fibres by heat sealing, and
the strength of connection between the covering sheet (3) and the surface particles or fibres of the tray material is predominantly greater than the strength of connection between the surface particles or fibres and the rest of the tray material, **characterized in that**
the tray material is not compressed prior to the sealing operation, and
is compressed by at least 30% at its thickest locations during the sealing operation.

2. Method according to Claim 1, **characterized in that** use is made of a covering sheet which, on the tray side, consists of a material which melts at a lower temperature than that on the side which is remote from the tray.

3. Tray (1) which is closed by means of a covering sheet (3), is made up of natural particles or fibres
and of which the border flange (2) is connected to the covering sheet (3) by hot-melt adhesion in such a manner
that the strength of connection by which the covering sheet adheres directly to the surface particles or fibres of the border flange is greater than that by which these particles or fibres adhere to the rest of the tray material,
**characterized in that**
the tray material is not compressed prior to the sealing operation, and **in that** the tray material (2) which is subjected to the sealing operation is compressed by at least 30% at its thickest locations.

4. Tray according to Claim 3, **characterized in that** the covering sheet (3) is a composite sheet of which the tray-side layer, once melted, is connected to the surface of the wood-pulp tray.

5. Tray according to Claim 3 or 4, **characterized in that** the covering sheet (3) is perforated.

6. Tray according to one of Claims 3 to 5, **characterized in that** it has through-passages (4).

7. Tray according to one of Claims 3 to 6, **characterized in that** the tray flange (2) is at least 3 mm in width.

8. Tray according to one of Claims 3 to 7, **characterized in that** the covering sheet (3) is sealed on in a stretched-out state.

## Revendications

1. Procédé pour fermer une barquette (1) constituée de particules ou de fibres naturelles, au moyen d'un opercule (3) à sceller avec le bord de la barquette,
dans lequel l'opercule est scellé par collàge à chaud directement avec les particules ou fibres superficielles et
la solidité de l'assemblage entre l'opercule (3) et les particules ou fibres superficielles de la matière de la barquette est nettement supérieure à la solidité de l'assemblage entre les particules ou fibres superficielles et la matière restante de la barquette, **caractérisé en ce que**
la matière de la barquette n'est pas pressée avant le scellement et que
pour un scellement en ses points les plus épais elle est comprimée d'au moins 30%.

2. Procédé selon la revendication 1, **caractérisé en ce qu'**on utilise un opercule qui est fait côté barquette d'une matière à plus bas point de fusion que sur le côté opposé à la barquette.

3. Barquette (1) constituée de particules ou de fibres naturelles fermée au moyen d'un opercule (3),
dont la collerette de bordure (2) est assemblée par collage par fusion avec l'opercule (3) de telle manière que
l'opercule adhère directement aux particules ou fibres superficielles de la collerette de bordure (2) avec une force de liaison plus importante que celle de ces particules ou fibres au reste de la matière de la barquette,
**caractérisée en ce que**
la matière de la barquette n'est pas pressée avant le scellement et que la matière de la barquette soumise au scellement est comprimée d'au moins 30 % en ses points les plus épais.

4. Barquette selon la revendication 3, **caractérisée en ce que** l'opercule (3) est une feuille composite dont la couche côté barquette est assemblée, après fusion, avec la surface de la barquette en pâte mécanique.

5. Barquette selon la revendication 3 ou 4, **caractérisée en ce que** l'opercule (3) est perforé.

6. Barquette selon l'une des revendications 3 à 5, **caractérisée en ce qu'**elle présente des ajours (4).

7. Barquette selon l'une des revendications 3 à 6, **caractérisée en ce que** la collerette (2) de la barquette a une largeur d'au moins 3 mm.

8. Barquette selon l'une des revendications 3 à 7, **caractérisée en ce que** l'opercule (3) est scellé tendu.
